# FASCICULE DE BREVET EUROPEEN

(11) **EP 1 530 897 B1**
(45) Date de publication et mention de la délivrance du brevet: **13.09.2006**
(21) Numéro de dépôt: 04292686.5
(22) Date de dépôt: 12.11.2004
(51) Int. Cl.: A01K 1/02

(54) **Râtelier**
Futterraufe
Rack for animal feed

(30) Priorité: 14.11.2003 FR 0313319
(43) Date de publication de la demande: 18.05.2005
(73) Titulaire: Dessoliere, Thierry, 36340 Maillet (FR)
(72) Inventeur: Dessoliere, Thierry, 36340 Maillet (FR)
(74) Mandataire: Debay, Yves

(56) Documents cités:
- FR-A- 2 628 288
- GB-A- 2 369 033
- US-A- 4 753 194
- US-A1- 2002 195 060
- US-A1- 2003 029 386

## Description

La présente invention concerne un râtelier destiné à recevoir le fourrage constituant une partie de l'alimentation des animaux de ferme, en particulier des bovins.

En général, les éleveurs de bovins distribuent le fourrage dans des râteliers et des aliments complémentaires dans des distributeurs dits "cornadis".

Certains râteliers connus dans l'art antérieur sont ronds ou carrés, et permettent d'accueillir une ou deux bottes rondes maximum. L'éleveur les pose à même le sol dans la stabulation libre, en les fixant ou non au sol. Ces râteliers ont l'inconvénient d'obliger l'éleveur à entrer dans la stabulation pour recharger les râteliers en fourrage, ce qui peut nuire à sa sécurité. Un autre inconvénient de ces râteliers est qu'ils prennent de la place au sol et laissent donc moins de place pour la circulation des animaux.

Ces inconvénients ont été palliés dans l'art antérieur par des râteliers fixés aux barrières. Ces râteliers sont de deux sortes. Certains sont fixés au-dessus de la barrière et permettent d'accueillir une seule botte ronde, d'autres sont fixés le long d'une barrière et l'éleveur doit dérouler la botte pour la disposer dans ces râteliers.

La présente invention a pour but de pallier certains inconvénients de l'art antérieur en proposant un râtelier qui permette de contenir plusieurs bottes de fourrage, qui puisse être rechargé sans risques pour l'éleveur depuis l'extérieur de la stabulation et sans manipulations des bottes, qui puisse accueillir indifféremment des bottes rondes ou carrées, qui ne gêne pas la circulation des animaux dans la stabulation et empiète peu sur leur espace, qui soit facile à transporter et à installer et qui puisse être galvanisé.

Ce but est atteint par un râtelier, destiné à recevoir au moins une botte de fourrage pour nourrir des animaux de ferme, caractérisé en ce qu'il est constitué d'un cadre et d'au moins deux montants, fixés de façon démontable de chaque côté du plan de symétrie dudit cadre, montants sur lesquels est fixée de façon démontable respectivement une surface et une grille plane, les plans de symétrie de la surface et de la grille étant sécants entre eux, la surface et la grille étant destinées à soutenir la (les) botte(s) de fourrage, et les animaux se nourrissant à travers l'écartement prévu entre les barreaux de la grille, en ce que le cadre est fixé de façon démontable entre deux poteaux, de façon à pouvoir pivoter autour d'un des poteaux pour réaliser une barrière permettant de bloquer les animaux à l'intérieur du bâtiment de ferme ou de les faire sortir dudit bâtiment lorsque l'éleveur le décide.

Selon une autre particularité, les différents éléments constituant le râtelier sont galvanisables.

Selon une autre particularité, le cadre est sensiblement rectangulaire et constitué de deux montants horizontaux et de deux montants verticaux, en ce que, côté animaux, les montants sont constitués d'au moins deux barres tubulaires coudées sensiblement en forme d'oreille ou de "C" inversé, dites barres tubulaires extrêmes, fixées de façon démontable sur les montants horizontaux du cadre, chacune à proximité d'un des montants verticaux de cadre, et en ce que, de l'autre côté du cadre par rapport aux animaux, les montants sont des montants extérieurs fixés de façon démontable aux barres tubulaires extrêmes pour former chacun avec la surface et le cadre un triangle.

Selon une autre particularité, l'espace formé entre les triangles constitués par les montants extérieurs avec la surface et le cadre est libre pour permettre un chargement par l'extérieur du râtelier.

Selon une autre particularité, côté animaux, au moins une barre tubulaire coudée, sensiblement en forme d'oreille ou de "C" inversé, dite(s) barre(s) tubulaire(s) intermédiaire(s), est fixée de façon démontable aux montants horizontaux du cadre, entre les barres tubulaires extrêmes.

Selon une autre particularité, la grille est fixée à chacune des barres tubulaires extrêmes ou intermédiaires, et en ce que la surface est fixée à la fois aux montants extérieurs et au montant horizontal inférieur du cadre.

Selon une autre particularité, la surface est en tôle et munie d'une pluralité de nervures destinées à éviter un effet "ventouse".

Selon une autre particularité, chaque barre tubulaire extrême et chaque montant extérieur est muni d'une grille permettant de retenir le fourrage.

Selon une autre particularité, la surface est inclinée d'un angle β par rapport à la verticale, et en ce que la grille est inclinée d'un angle α par rapport à la verticale.

Selon une autre particularité, α est de l'ordre de 20° à 40° et β de l'ordre de 30° à 60°.

Selon une autre particularité, le râtelier est muni, sous le cadre, d'une barre de renfort.

Selon une autre particularité, le cadre est muni de trois points de pivotement autour du poteau autour duquel le râtelier pourra pivoter, dit poteau de pivotement :
- le premier point de pivotement étant réalisé par un ergot sensiblement vertical situé à proximité du coin inférieur du cadre situé à proximité du poteau de pivotement, qui est inséré dans un perçage réalisé dans une plaque sensiblement horizontale fixée sur le poteau de pivotement,
- le deuxième point de pivotement étant réalisé par une première tige sensiblement verticale insérée dans deux perçages réalisés respectivement dans deux plaques sensiblement horizontales et disposées l'une au-dessus de l'autre, ainsi que dans la boucle d'une deuxième tige sensiblement horizontale fixée à proximité du coin supérieur du cadre situé à proximité du poteau de pivotement, et
- le troisième point de pivotement étant réalisé par le point de fixation d'une des extrémités d'un tendeur à proximité de l'extrémité supérieure du poteau de pivotement, l'autre extrémité dudit tendeur étant fixée à proximité du coin supérieur du cadre opposé au poteau de pivotement.

Selon une autre particularité, le cadre est muni de deux points de blocage du râtelier :
- le premier point de blocage étant réalisé par un élément en saillie, situé à proximité du coin inférieur du cadre situé à l'opposé du poteau de pivotement, qui est inséré entre deux premières plaques munies chacune d'un perçage traversé par une tige de blocage, sensiblement verticale et amovible, cette tige de blocage retenant ledit élément en saillie entre le poteau opposé au poteau de pivotement et ladite tige de blocage,
- le deuxième point de blocage étant réalisé par une deuxième tige, sensiblement verticale et amovible, qui est insérée dans deux perçages réalisés respectivement dans deux plaques sensiblement horizontales et disposées l'une au-dessus de l'autre, ainsi que dans la boucle d'une deuxième tige sensiblement horizontale fixée sur le côté du cadre situé à proximité du poteau opposé au poteau de pivotement.

Un autre but de l'invention est de proposer un procédé de montage du râtelier selon l'invention. Ce but est atteint par le procédé, caractérisé en ce qu'il comprend les étapes suivantes :
- fixation du cadre entre les poteaux du bâtiment de ferme,
- fixation des barres tubulaires intermédiaires au cadre,
- fixation de la grille aux barres tubulaires intermédiaires,
- fixation des barres tubulaires extrêmes au cadre et à la grille,
- fixation du montant extérieur aux barres tubulaires extrêmes, et
- fixation de la surface aux montants extérieurs et au cadre.

D'autres particularités et avantages de la présente invention apparaîtront plus clairement à la lecture de la description ci-après, faite en référence aux dessins annexés, dans lesquels :
- la figure 1 représente une vue de côté du râtelier selon l'invention,
- la figure 2 représente une vue de face, côté extérieur, du râtelier fixé entre des poteaux d'un bâtiment de ferme, seule la partie intérieure du râtelier étant montée,
- les figures 3 à 8 représentent une vue de côté des différents éléments constituant le râtelier selon l'invention, avant montage du râtelier, la figure 3 représentant une vue de côté du cadre, les figures 4 et 5, une vue de côté des différents types de barres tubulaires coudées situées côté intérieur, la figure 6, une vue de côté de la grille soutenant les bottes côté intérieur, la figure 7, une vue de côté d'un des montants situés côté extérieur, et la figure 8, une vue de côté de la surface soutenant les bottes côté extérieur,
- les figures 9 à 13 représentent une vue de côté du râtelier selon l'invention, au cours des différentes étapes de montage du râtelier par assemblage successif des éléments représentés sur les figures 3 à 8.

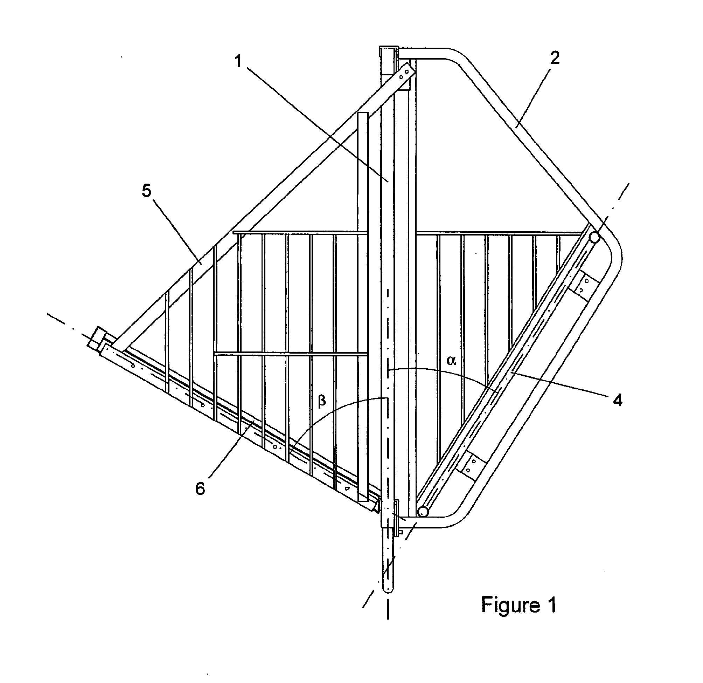

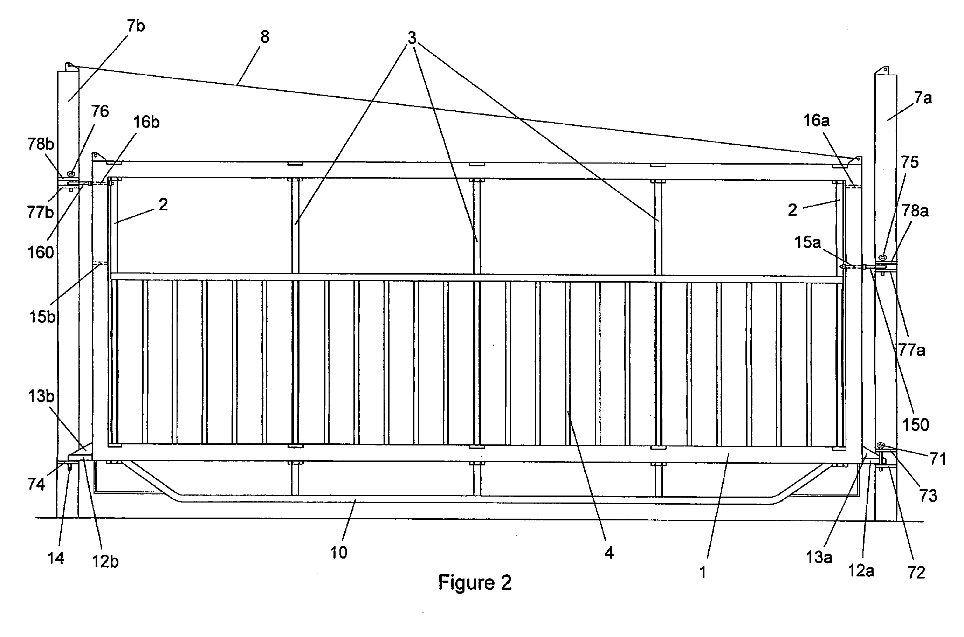

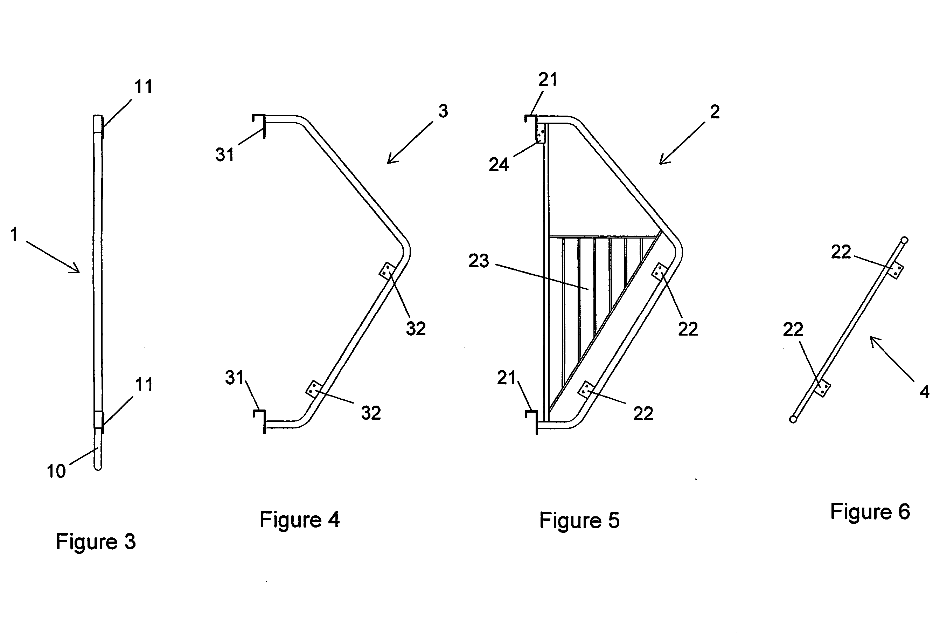

Le râtelier selon l'invention, représenté en particulier sur la figure 1, comprend un cadre (1), visible en particulier sur les figures 2 et 3. Ce cadre (1) est constitué de quatre montants sensiblement orthogonaux les uns aux autres. Les deux montants verticaux du cadre se fixent, comme on le verra plus loin, entre les poteaux (7a, 7b) situés à l'entrée d'un bâtiment de ferme, le râtelier selon l'invention remplaçant la barrière permettant l'entrée et la sortie des animaux. Le cadre est muni, à son extrémité inférieure, d'une barre de renfort (10) tubulaire située dans le même plan que le cadre (1). Cette barre de renfort est par exemple fixée à plusieurs endroits du montant inférieur du cadre, par soudure avec une pluralité de tubes, comme représenté sur la figure 2. La distance comprise entre le bas de la barre de renfort (10) et le sol doit être inférieure à la taille moyenne du museau des bovins, de façon à éviter que ces derniers se coincent le museau sous le râtelier. Le cadre (1) comporte également, sur chacun de ses montants horizontaux, une pluralité de plaques (11) munies chacune d'au moins un perçage.

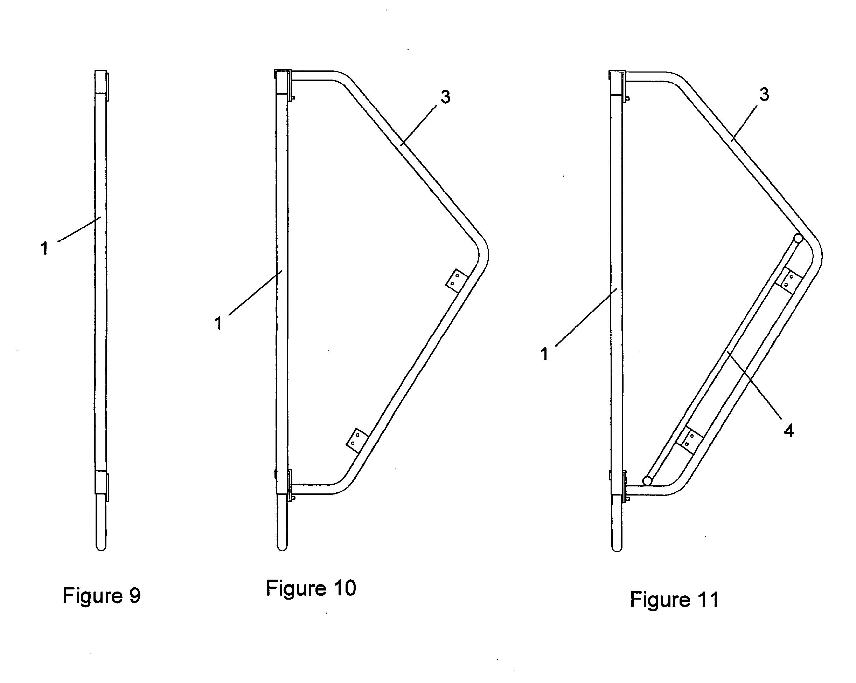

Le râtelier selon l'invention comprend également une pluralité de barres tubulaires coudées (2, 3) sensiblement en forme d'oreille ou de "C" inversé, contenue chacune dans un plan sensiblement orthogonal au plan du cadre (1). Deux des barres tubulaires coudées, dites barres tubulaires extrêmes (2), sont fixées respectivement à chacune des extrémités du cadre (1) du râtelier, tandis que les autres barres tubulaires coudées, dites barres tubulaires intermédiaires (3), sont fixées sur le cadre en étant réparties entre les barres tubulaires extrêmes (2), comme représenté en particulier sur la figure 2. Le râtelier selon l'invention comporte par exemple trois barres tubulaires intermédiaires (3). Comme représenté en particulier sur les figures 4 et 5, chaque barre tubulaire extrême ou intermédiaire (2, 3) est munie à chacune de ses extrémités d'un crochet (21, 31) muni d'au moins un perçage. Chacun des crochets (21, 31) est destiné à suspendre la barre tubulaire extrême ou intermédiaire (2, 3) sur les montants horizontaux du cadre, comme représenté en particulier sur la figure 10, de façon à ce que l'emplacement de chacun des crochets (21, 31) corresponde à l'emplacement d'une plaque (11) du cadre (1). Chaque barre tubulaire extrême ou intermédiaire (2, 3) est alors fixée au cadre (1) par boulonnage des plaques (11) du cadre (1) avec les crochets (21, 31) correspondants de ladite barre. Les barres tubulaires extrêmes et intermédiaires (2, 3) se fixent toutes du même côté du cadre (1), qui est le côté du râtelier duquel se trouvent les animaux, donc le côté intérieur du bâtiment de ferme.

Chaque barre tubulaire extrême ou intermédiaire (2, 3) est également munie d'une paire de plaques (22, 32) située dans le plan de ladite barre et disposées vers l'intérieur de l'oreille, sur une partie droite de la barre faisant un angle (α) déterminé avec le plan du cadre. Cet angle est par exemple compris entre 20° et 40°, de préférence égal à 30°. Chacune de ces plaques (22, 32) est munie d'au moins un perçage. Par ailleurs, chacune des barres tubulaires extrêmes (2) est munie d'une grille (23), située dans le plan de ladite barre, et constituée de barreaux verticaux par exemple espacés les uns des autres de 10 cm, de façon à éviter que le foin ne tombe de chaque côté du râtelier lorsque les bottes se défont au fur et à mesure que les animaux s'en nourrissent.

Le râtelier selon l'invention comprend également une grille (4), représentée en particulier sur les figures 2 et 6, contenue dans un plan faisant un angle (α) déterminé par rapport au plan du cadre, et destinée à soutenir les bottes côté animaux. Cet angle est par exemple compris entre 20° et 40°, de préférence égal à 30°. Ainsi, la grille (4) du râtelier est disposée parallèlement aux parties droites des barres tubulaires extrêmes et intermédiaires (2, 3) munies d'une paire de plaques (22, 32), à l'intérieur des oreilles, comme cela est représenté en particulier sur la figure 11. La grille (4) du râtelier est constituée de barreaux sensiblement parallèles entre eux dont l'espacement est suffisant pour permettre le passage d'un museau de bovin, mais trop petit pour permettre le passage de sa tête, de façon à éviter que les animaux ne se coincent la tête. L'espacement des barreaux de la grille (4) est donc par exemple de 19 cm. La grille (4) est munie d'une pluralité de paires de plaques (42) disposées sous la grille dont l'emplacement correspond à l'emplacement des paires de plaques (22, 32) des barres tubulaires extrêmes et intermédiaires (2, 3). La grille (4) est fixée à chaque barre tubulaire extrême ou intermédiaire (2, 3) par boulonnage des plaques (42) de la grille (4) avec les plaques (22, 32) desdites barres.

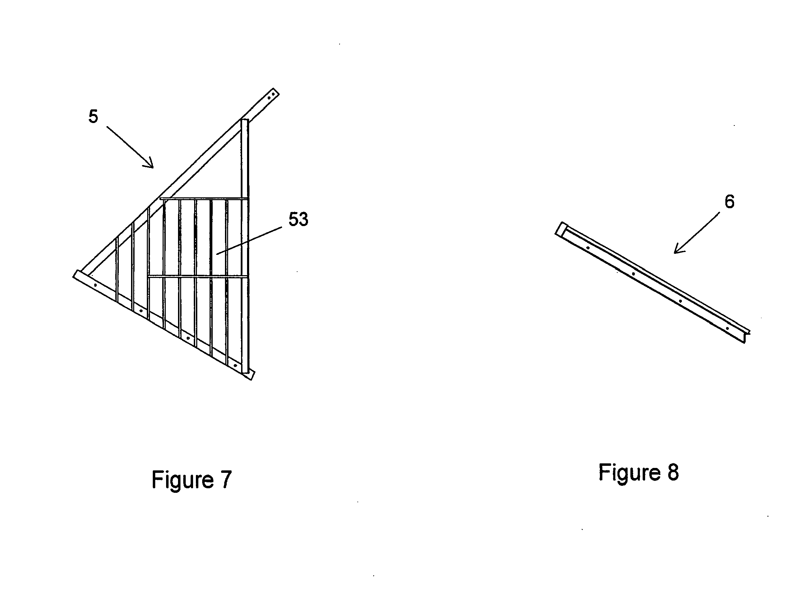

Le râtelier selon l'invention comprend également deux montants extérieurs (5), sensiblement triangulaires, représentés en particulier sur la figure 7, et contenus dans un plan sensiblement orthogonal au plan du cadre (1). Chacun des montants extérieurs (5) est constitué de trois barres boulonnées les unes aux autres, l'une de ces barres étant sensiblement verticale, et une autre faisant un angle (β) déterminé avec la verticale. Cet angle est par exemple compris entre 30° et 60°, de préférence égal à 45°. La troisième barre dépasse du triangle vers le haut, et est munie à son extrémité supérieure d'au moins un perçage. Ce(s) perçage(s) permet(tent) la fixation de chacun des montants extérieurs (5) par boulonnage sur une plaque (24) fixée en haut de chaque barre tubulaire extrême (2). Chacun des montants extérieurs (5) est fixé du côté opposé aux animaux, donc du côté extérieur du bâtiment de ferme. Chacun des montants extérieurs (5) est muni d'une grille (53) située dans le plan dudit montant, constituée de barreaux verticaux par exemple espacés les uns des autres de 10 cm, de façon à éviter que le foin ne tombe de chaque côté du râtelier lorsque les bottes se défont au fur et à mesure que les animaux s'en nourrissent.

Le râtelier selon l'invention comprend enfin une surface (6), représentée en particulier sur la figure 8, contenue dans un plan faisant un angle (β) déterminé par rapport au plan du cadre, et destinée à soutenir les bottes côté extérieur. Cet angle est par exemple compris entre 30° et 60°, de préférence égal à 45°. Ainsi, la surface (6) est disposée parallèlement aux barres des montants extérieurs (5) faisant un angle (β) déterminé par rapport au plan du cadre, comme cela est représenté en particulier sur la figure 1. La surface est de préférence en tôle et munie d'une pluralité de nervures destinées à éviter un effet "ventouse" lorsque les bottes, qui sont posées sur cette surface (6) et sur la grille (4), sont légèrement humides. La surface (6) est munie d'au moins trois rebords sur ses côtés, qui viennent en contact respectivement avec les montants latéraux (5) et avec le montant horizontal inférieur du cadre (1 ), sur lesquels ils sont fixés par boulonnage. Pour faciliter la mise en place de la surface (6) contre le montant horizontal inférieur du cadre (1) et pour que le râtelier soit plus solide, le rebord de la surface (6) se fixant sur ledit montant du cadre comporte un angle droit permettant de prendre appui sur deux faces de ce dit montant, comme représenté en particulier sur la figure 1. L'espace formé entre les triangles constitués par les montants extérieurs (5) avec la surface (6) et le cadre (1) est libre pour permettre un chargement des bottes par l'extérieur du râtelier.

En effet, le râtelier étant amené à supporter une masse importante (jusqu'à environ 2 tonnes), il est important que sa structure soit solide. Le râtelier est donc métallique. Ainsi, l'ensemble des éléments (1 à 6) constituant le râtelier, ainsi que les éléments de fixation du râtelier sur les poteaux (7a, 7b) du bâtiment de ferme, doivent être suffisamment résistants pour supporter plusieurs tonnes. Les grilles (23, 53) des barres tubulaires extrêmes (2) et des montants extérieurs (5) sont par exemple fixés par soudage respectivement aux barres tubulaires extrêmes (2) et aux montants extérieurs (5).

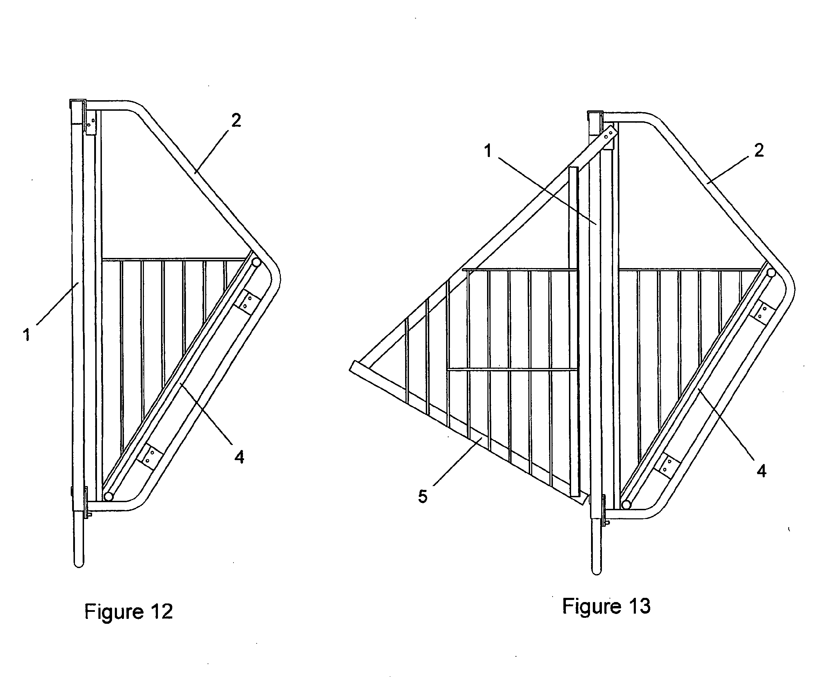

Comme cela est représenté sur les figures 9 à 13 illustrant les différentes étapes de montage du râtelier, la première étape du montage (figure 9) consiste à fixer le cadre (1) entre les poteaux (7a, 7b) du bâtiment de ferme. Dans une deuxième étape (figure 10), les barres tubulaires intermédiaires (3) sont fixées au cadre (1). Dans une troisième étape (figure 11), la grille (4) est fixée aux barres tubulaires intermédiaires (3).Dans une quatrième étape, (figure 12), les barres tubulaires extrêmes (2) sont fixées au cadre (1) et à la grille (4). Dans une cinquième étape (figure 13), le montant extérieur (5) est fixé aux barres tubulaires extrêmes (2). Dans une sixième étape (figure 1), la surface (6) est fixée aux montants extérieurs (5) et au cadre (1).

Une fois le montage terminé, l'éleveur dispose plusieurs bottes de foin sur la grille (4) et la surface (6) en les insérant depuis l'extérieur de la ferme. Ainsi, sa sécurité est parfaitement assurée puisqu'il n'a pas à pénétrer dans la stabulation. Les animaux se nourrissent en passant leur museau entre les barreaux de la grille (4) du râtelier.

La fixation du cadre (1) du râtelier selon l'invention entre des poteaux (7a, 7b) d'un bâtiment de ferme va maintenant être décrite. Le râtelier étant disposé à la place d'une barrière, il doit pouvoir être ouvert pour laisser sortir les animaux et/ou cureter les stabulations. Pour ce faire, le cadre (1) du râtelier est fixé de façon à pouvoir pivoter autour d'un des poteaux (7a, 7b) et à pouvoir être maintenu en position fermée sans que les animaux puissent sortir sans intervention de l'éleveur. Le cadre (1) du râtelier est symétrique de façon à ce que l'éleveur puisse choisir dans quel sens le cadre va s'ouvrir, c'est-à-dire autour de quel poteau il va pivoter.

Le cadre (1) est muni, à proximité de l'extrémité inférieure de chacun de ses montants verticaux, d'un élément en saillie (12a, 12b) sensiblement horizontal, disposé vers l'extérieur du cadre, et renforcé par une plaque triangulaire (13a, 13b) servant d'équerre. Un ergot (14) sensiblement vertical est soudé en dessous de chaque élément en saillie (12a, 12b). Cet ergot (12) va servir de pivot du côté du poteau de pivotement (7b) en étant inséré dans un perçage réalisé dans une plaque (74) sensiblement horizontale fixée sur le poteau de pivotement (7b), comme représenté sur la figure 2. L'ergot situé de l'autre côté du cadre est scié. Lorsque le râtelier est en position fermée, l'élément en saillie (12a) situé à l'opposé du poteau de pivotement (7b) est inséré entre deux premières plaques (72, 73) munies chacune d'un perçage traversé par une première tige de blocage (71) amovible sensiblement verticale. Cette première tige de blocage (71) permet de retenir le râtelier lorsque l'élément en saillie (12a) situé à l'opposé du poteau de pivotement (7b) est situé entre le poteau (7a) opposé au poteau de pivotement (7b) et ladite première tige de blocage (71). Il suffit de retirer cette première tige de blocage (71) des perçages pour libérer ledit élément en saillie (12a).

Le cadre (1) est également muni, sur chacun de ses montants verticaux, d'au moins deux perçages (respectivement 15a, 16a et 15b, 16b), sensiblement horizontaux situés dans le plan du cadre. Un de ces perçages (15a, 15b) est situé à une hauteur facilement accessible par une personne de taille moyenne, l'autre perçage (16a, 16b) étant situé à proximité de l'extrémité supérieure du montant vertical correspondant du cadre (1). Le perçage (16a, 16b) le plus élevé est utilisé pour le pivotement du râtelier tandis que l'autre (15a, 15b) est utilisé pour bloquer le râtelier en position fermée. Une tige (150, 160) est fixée dans chacun des perçages utilisés (respectivement 15a et 16b dans le cas de la figure 2, le poteau 7b étant désigné comme le poteau de pivotement) par des boulons, cette tige (150, 160) se terminant par une boucle. Chacune des boucles est insérée entre deux plaques (respectivement 77a, 78a et 77b, 78b), appelées respectivement deuxièmes plaques (77a, 78a) et troisièmes plaques (77b, 78b), munies d'un perçage. Une deuxième et une troisième tiges de blocage (respectivement 75 et 76) amovibles sensiblement verticales traversent ces perçages ainsi que la boucle des tiges correspondantes (respectivement 150 et 160). En enlevant la deuxième tige de blocage (75), la boucle située à l'opposé du poteau de pivotement (7b) est libérée et le râtelier peut pivoter autour du poteau de pivotement (7b), la troisième tige de blocage (76) servant alors de pivot.

Enfin, pour renforcer la structure lors du pivotement, un tendeur (8) est tendu entre un point situé à proximité de l'extrémité supérieure du poteau de pivotement (7b) et l'extrémité supérieure du montant vertical du cadre (1) opposée au poteau de pivotement (7b), comme cela est représenté sur la figure 2. Ainsi, le râtelier peut pivoter autour du poteau de pivotement (7b) en étant maintenu par trois points de pivotement.

Le montage du râtelier selon l'invention est relativement simple. Le fait que le râtelier soit livré en plusieurs éléments permet de le galvaniser avant montage, ce qui permet une plus longue tenue que de la peinture. Il n'existe en effet pas de bains de galvanisation de volume suffisamment important pour contenir un râtelier monté. De plus, le transport est facilité puisque les différents éléments du râtelier peuvent être emboîtés pour obtenir un volume inférieur à celui du râtelier monté, ce qui présente également l'avantage de permettre le transport de plusieurs râteliers en un seul voyage.

La longueur du râtelier est par exemple, mais de façon non limitative, de 5 m ou de 6 m, ce qui correspond à la distance standard de l'entrée des bâtiments de ferme. Ainsi, le râtelier permet d'accueillir jusqu'à 4 bottes rondes de taille standard ou deux bottes rectangulaires de taille standard. La hauteur du râtelier est par exemple d'environ 2,5 m, réalisant ainsi une véritable barrière pour les bovins. Enfin, l'épaisseur du râtelier est par exemple de 2,5 m, une partie étant située à l'extérieur du bâtiment ce qui permet de peu empiéter sur l'espace des animaux. On peut prévoir d'installer un toit au-dessus du râtelier pour protéger le fourrage contre les intempéries.

Il doit être évident, pour les personnes versées dans l'art, que la présente invention permet des modes de réalisation sous de nombreuses autres formes spécifiques sans l'éloigner du domaine d'application de l'invention comme revendiqué. En particulier, le cadre (1) peut être fixé aux poteaux (7a, 7b) du bâtiment de ferme par tout autre moyen de fixation suffisamment résistant pour permettre l'ouverture du râtelier comme une barrière par pivotement autour d'un axe vertical. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Râtelier destiné à recevoir au moins une botte de fourrage pour nourrir des animaux de ferme, **caractérisé en ce qu**'il est constitué d'un cadre (1) et d'au moins deux montants (2, 5), fixés de façon démontable de chaque côté du plan de symétrie dudit cadre (1), montants (2, 5) sur lesquels est fixée de façon démontable respectivement une surface (6) et une grille plane (4), les plans de symétrie de la surface (6) et de la grille (4) étant sécants entre eux, la surface (6) et la grille (4) étant destinées à soutenir la (les) botte(s) de fourrage, et les animaux se nourrissant à travers l'écartement prévu entre les barreaux de la grille (4), en ce que le cadre (1) est fixé de façon démontable entre deux poteaux (7a, 7b), de façon à pouvoir pivoter autour d'un des poteaux (7b) pour réaliser une barrière permettant de bloquer les animaux à l'intérieur du bâtiment de ferme ou de les faire sortir dudit bâtiment lorsque l'éleveur le décide.

2. Râtelier selon la revendication 1, **caractérisé en ce que** les différents éléments constituant le râtelier sont galvanisables.

3. Râtelier selon la revendication 1 ou 2, **caractérisé en ce que** le cadre (1) est sensiblement rectangulaire et constitué de deux montants horizontaux et de deux montants verticaux, **en ce que**, côté animaux, les montants sont constitués d'au moins deux barres tubulaires coudées sensiblement en forme d'oreille ou de "C" inversé, dites barres tubulaires extrêmes (2), fixées de façon démontable sur les montants horizontaux du cadre (1), chacune à proximité d'un des montants verticaux de cadre (1), et **en ce que**, de l'autre côté du cadre par rapport aux animaux, les montants, dits montants extérieurs (5) sont fixés de façon démontable aux barres tubulaires extrêmes (2) pour former chacun avec la surface (6) et le cadre (1) un triangle.

4. Râtelier selon la revendication 3, **caractérisé en ce que** l'espace entre les triangles constitués par les montants extérieurs (5) avec la surface (6) et le cadre (1) est libre pour permettre un chargement par l'extérieur du râtelier.

5. Râtelier selon la revendication 3 ou 4, **caractérisé en ce que**, côté animaux, au moins une barre tubulaire coudée, sensiblement en forme d'oreille ou de "C" inversé, dite(s) barre(s) tubulaire(s) intermédiaire(s) (3), est fixée de façon démontable aux montants horizontaux du cadre (1), entre les barres tubulaires extrêmes (2).

6. Râtelier selon la revendication 4 ou 5, **caractérisé en ce que** la grille (4) est fixée à chacune des barres tubulaires extrêmes (2) ou intermédiaires (3), et **en ce que** la surface (6) est fixée à la fois aux montants extérieurs (5) et au montant horizontal inférieur du cadre (1).

7. Râtelier selon une des revendications 1 à 6, **caractérisé en ce que** la surface (6) est en tôle et munie d'une pluralité de nervures destinées à éviter un effet "ventouse".

8. Râtelier selon une des revendications 3 à 7, **caractérisé en ce que** chaque barre tubulaire extrême (2) et chaque montant extérieur (5) est muni d'une grille (23, 53) permettant de retenir le fourrage.

9. Râtelier selon une des revendications 1 à 8, **caractérisé en ce que** la surface (6) est inclinée d'un angle β par rapport à la verticale, et **en ce que** la grille (4) est inclinée d'un angle α par rapport à la verticale.

10. Râtelier selon la revendication 9, **caractérisé en ce que** α est de l'ordre de 20° à 40° et β de l'ordre de 30° à 60°.

11. Râtelier selon une des revendications 1 à 10, **caractérisé en ce que** le râtelier est muni, sous le cadre (1), d'une barre de renfort (10).

12. Râtelier selon une des revendications 1 à 11, **caractérisé en ce que** le cadre (1) est muni de trois points de pivotement autour du poteau autour duquel le râtelier pourra pivoter, dit poteau de pivotement (7b) :
- le premier point de pivotement étant réalisé par un ergot (14) sensiblement vertical situé à proximité du coin inférieur du cadre (1) situé à proximité du poteau de pivotement (7b), qui est inséré dans un perçage réalisé dans une plaque (74) sensiblement horizontale fixée sur le poteau de pivotement (7b),
- le deuxième point de pivotement étant réalisé par une première tige (76) sensiblement verticale insérée dans deux perçages réalisés respectivement dans deux plaques (77b, 78b) sensiblement horizontales et disposées l'une au-dessus de l'autre, ainsi que dans la boucle d'une deuxième tige (160) sensiblement horizontale fixée à proximité du coin supérieur du cadre (1) situé à proximité du poteau de pivotement (7b), et
- le troisième point de pivotement étant réalisé par le point de fixation d'une des extrémités d'un tendeur (8) à proximité de l'extrémité supérieure du poteau de pivotement (7b), l'autre extrémité dudit tendeur étant fixée à proximité du coin supérieur du cadre (1) opposé au poteau de pivotement (7b).

13. Râtelier selon une des revendications 1 à 12, **caractérisé en ce que** le cadre (1) est muni de deux points de blocage du râtelier :
- le premier point de blocage étant réalisé par un élément en saillie (12a), situé à proximité du coin inférieur du cadre (1) situé à l'opposé du poteau de pivotement (7b), qui est inséré entre deux premières plaques (72, 73) munies chacune d'un perçage traversé par une tige de blocage (71), sensiblement verticale et amovible, cette tige de blocage (71) retenant ledit élément en saillie (12a) entre le poteau (7a) opposé au poteau de pivotement (7b) et ladite tige de blocage (71),
- le deuxième point de blocage étant réalisé par une deuxième tige (76), sensiblement verticale et amovible, qui est insérée dans deux perçages réalisés respectivement dans deux plaques (77a, 78a) sensiblement horizontales et disposées l'une au-dessus de l'autre, ainsi que dans la boucle d'une deuxième tige (150) sensiblement horizontale fixée sur le côté du cadre (1) situé à proximité du poteau (7a) opposé au poteau de pivotement (7b).

14. Procédé de montage du râtelier selon une des revendications 1 à 13, **caractérisé en ce qu**'il comprend les étapes suivantes :
- fixation du cadre (1) entre les poteaux (7a, 7b) du bâtiment de ferme,
- fixation des barres tubulaires intermédiaires (3) au cadre (1),
- fixation de la grille (4) aux barres tubulaires intermédiaires (3),
- fixation des barres tubulaires extrêmes (2) au cadre (1) et à la grille (4),
- fixation du montant extérieur (5) aux barres tubulaires extrêmes (2), et
- fixation de la surface (6) aux montants extérieurs (5) et au cadre (1).

## Claims

1. Rack intended to contain at least one bale of fodder for feeding farm animals, **characterised in that** it is constituted by a frame (1) and at least two uprights (2, 5) fixed in a removable manner on either side of the plane of symmetry of said frame (1), on which uprights (2, 5) a surface (6) and a flat grid (4) respectively are fixed in a removable manner, the planes of symmetry of the surface (6) and the grid (4) intersecting each other, the surface (6) and the grid (4) being intended to support the bale(s) of fodder, and the animals feeding through the gap provided between the bars of the grid (4), **in that** the frame (1) is fixed in a removable manner between two posts (7a, 7b), so as to be able to pivot about one of the posts (7b) in order to produce a barrier making it possible to lock the animals inside the farm building or allow them to leave said building, as the breeder decides.

2. Rack according to Claim 1, **characterised in that** the various components constituting the rack are galvanisable.

3. Rack according to Claim 1 or 2, **characterised in that** the frame (1) is substantially rectangular and constituted by two horizontal uprights and two vertical uprights, **in that**, on the animal side, the uprights are constituted by at least two elbowed tubular bars substantially in the shape of an ear or an inverted "C", said outermost tubular bars (2), fixed in a removable manner on the horizontal uprights of the frame (1), each in the vicinity of one of the vertical uprights of the frame (1), and **in that**, on the other side of the frame from the animals, the uprights, known as external uprights (5), are fixed in a removable manner to the outermost tubular bars (2) in order each to form a triangle with the surface (6) and the frame (1).

4. Rack according to Claim 3, **characterised in that** space between the triangles constituted by the external supports (5) with the surface (6) and the frame (1) is clear in order to allow loading from outside the rack.

5. Rack according to Claim 3 or 4, **characterised in that**, on the animal side, at least one elbowed tubular bar, substantially in the shape of an ear or an inverted "C", known as intermediate tubular bar(s) (3), is fixed in a removable manner to the horizontal uprights of the frame (1), between the outermost tubular bars (2).

6. Rack according to Claim 4 or 5, **characterised in that** the grid (4) is fixed to each of the outermost (2) or intermediate (3) tubular bars and **in that** the surface (6) is fixed to the external supports (5) and the lower horizontal upright of the frame (1) at the same time.

7. Rack according to one of Claims 1 to 6, **characterised in that** the surface (6) is made of sheet metal and provided with a plurality of ribs intended to avoid a "suction cup" effect.

8. Rack according to one of Claims 3 to 7, **characterised in that** each outermost tubular bar (2) and each external support (5) is provided with a grid (23, 53) making it possible to hold the fodder.

9. Rack according to one of Claims 1 to 8, **characterised in that** the surface (6) is tilted at an angle β to the vertical, and **in that** the grid (4) is tilted at an angle α to the vertical.

10. Rack according to Claim 9, **characterised in that** α is of the order of 20° to 40° and β of the order of 30° to 60°.

11. Rack according to one of Claims 1 to 10, **characterised in that** the rack is provided, under the frame (1), with a reinforcing bar (10).

12. Rack according to one of Claims 1 to 11, **characterised in that** the frame (1) is provided with three pivot points around the post about which the rack can pivot, known as a pivot post (7b):
- the first pivot point being produced by a substantially vertical lug (14) located in the vicinity of the lower corner of the frame (1) located in the vicinity of the pivot post (7b), which is inserted in a drill hole made in a substantially horizontal plate (74) fixed to the pivot post (7b),
- the second pivot point being produced by a first substantially vertical rod (76) inserted in two drill holes made in two substantially horizontal plates (77b, 78b) respectively, arranged above one another, as well as in the loop of a second substantially horizontal rod (160) fixed in the vicinity of the upper corner of the frame (1) located in the vicinity of the pivot post (7b), and
- the third pivot point being produced by the fixing point of one of the ends of a tensioner (8) in the vicinity of the upper end of the pivot post (7b), the other end of said tensioner being fixed in the vicinity of the upper corner of the frame (1) opposite the pivot post (7b).

13. Rack according to one of Claims 1 to 12, **characterised in that** the frame (1) is provided with two points for locking the rack:
- the first locking point being produced by a projecting component (12a), located in the vicinity of the lower corner of the frame (1) located opposite the pivot post (7b), which is inserted between two first plates (72, 73) each provided with a drill hole through which there passes a locking rod (71), substantially vertical and removable, this locking rod (71) holding said projecting component (12a) between the post (7a) opposite the pivot post (7b) and said locking rod (71),
- the second locking point being produced by a second, substantially vertical and removable rod (76), which is inserted into two drill holes produced in two substantially horizontal plates (77a, 78a) respectively, arranged above one another, as well as in the loop of a second substantially horizontal rod (150) fixed on the side of the frame (1) located in the vicinity of the post (7a) opposite the pivot post (7b).

14. Method of mounting the rack according to one of Claims 1 to 13, **characterised in that** it comprises the following steps:
- fixing the frame (1) between the posts (7a, 7b) of the farm building,
- fixing the intermediate tubular bars (3) to the frame (1),
- fixing the grid (4) to the intermediate tubular bars (3),
- fixing the outermost tubular bars (2) to the frame (1) and the grid (4),
- fixing the external support (5) to the outermost tubular bars (2), and
- fixing the surface (6) to the external supports (5) and the frame (1).

## Patentansprüche

1. Krippenrost für wenigstens eine Portion Futter für das Füttern von Farmtieren, **dadurch gekennzeichnet, dass** dieser aus einem Rahmen (1) und wenigstens zwei Stäben (2, 5) besteht, demontierbar befestigt auf jeder Seite der Symmetrieebene des so genannten Rahmens (1), wobei an den Stäben (2, 5) eine ebene Fläche (6) bzw. ein ebener Rost (4) demontierbar befestigt ist, die Symmetrieebenen der Fläche (6) und des Rostes (4) sich schneiden, die Fläche (6) und der Rost (4) dazu bestimmt sind, die Portion (Portionen) des Futters zu halten, die Tiere sich ihre Nahrung aus dem Zwischenraum zwischen den Stäben des Rostes (4) entnehmen, der Rahmen (1) demontierbar zwischen zwei Stützpfeilern (7a, 7b) befestigt ist, so dass dieser sich um einen der Pfeiler (7b) bewegen kann, um als Hindernis zu dienen, welches die Tiere im Inneren des Farmgebäudes festhält oder das diesen den Ausgang aus dem Gebäude erlaubt, wann immer der Tierzüchter es bestimmt.

2. Krippenrost nach Anspruch 1, **dadurch gekennzeichnet, dass** die verschiedenen Elemente, aus denen der Krippenrost besteht, galvanisierbar sind.

3. Krippenrost nach Anspruch 1 oder 2, **dadurch gekennzeichnet, dass** der Rahmen (1) annähernd rechteckig ist und aus zwei horizontalen Stäben und zwei vertikalen Stäben besteht, und **dadurch**, dass auf der Seite der Tiere die Stäbe aus wenigstens zwei rohrförmigen Stangen bestehen, die annähernd in Kreisform oder in umgekehrter C-Form gebogen sind, die so genannten äußeren rohrförmigen Stangen (2) demontierbar befestigt sind an den vertikalen Stäben des Rahmens (1), jede in der Nähe eines der vertikalen Stäbe des Rahmens (1), und **dadurch**, dass auf der anderen Seite des Rahmens, bezogen auf die Tiere, die Stäbe, die so genannten äußeren Stäbe (5), demontierbar befestigt sind an den rohrförmigen äußeren Stangen (2), so dass jede mit der Fläche (6) und dem Rahmen (1) ein Dreieck bildet.

4. Krippenrost nach Anspruch 3, **dadurch gekennzeichnet, dass** der Zwischenraum zwischen den Dreiecken, gebildet aus den äußeren Stäben (5) mit der Fläche (6) und dem Rahmen (1), frei ist, um das Auffüllen des Krippenrostes von außen zu ermöglichen.

5. Krippenrost nach Anspruch 3 oder 4, **dadurch gekennzeichnet, dass** auf der Seite der Tiere wenigstens eine rohrförmige in Kreisform oder umgekehrter C-Form gebogene Stange, die so genannte/n rohrförmige/n Zwischenstange/n (3), demontierbar befestigt ist an den horizontalen Stäben des Rahmens (1), zwischen den äußeren rohrförmigen Stangen (2).

6. Krippenrost nach Anspruch 4 oder 5, **dadurch gekennzeichnet, dass** der Rost (4) an jeder der rohrförmigen äußeren Stangen (2) oder den dazwischen liegenden Stangen (3) befestigt ist, und **dadurch**, dass die Fläche (6) gleichzeitig an den äußeren Stäben (5) und an dem inneren horizontalen Stab des Rahmens (1) befestigt ist.

7. Krippenrost nach einem der Ansprüche 1 bis 6, **dadurch gekennzeichnet, dass** die Fläche (6) aus Blech ist, verstärkt durch eine Vielzahl von Rippen, welche dazu bestimmt ist, um den so genannten Saugnapfeffekt zu verhindern.

8. Krippenrost nach einem der Ansprüche 3 bis 7, **dadurch gekennzeichnet, dass** jede rohrförmige äußere Stange (2) und jeder äußere Stab (5) vorgesehen ist mit einem Rost (23, 53), welcher das Zurückhalten des Futters ermöglicht.

9. Krippenrost nach einem der Ansprüche 1 bis 8, **dadurch gekennzeichnet, dass** die Fläche (6) geneigt ist bis zu einem Winkel β in Bezug auf die Senkrechte, und **dadurch**, dass der Rost (4) geneigt ist bis zu einem Winkel α in Bezug auf die Senkrechte.

10. Krippenrost nach Anspruch 9, **dadurch gekennzeichnet, dass** α die Größenordnung von 20° bis 40° hat und β die Größenordnung von 30° bis 60°.

11. Krippenrost nach einem der Ansprüche 1 bis 10, **dadurch gekennzeichnet, dass** der Krippenrost unter dem Rahmen (1) durch eine Verstärkungsstange (10) verstärkt ist.

12. Krippenrost nach einer der Ansprüche 1 bis 11, **dadurch gekennzeichnet, dass** der Rahmen (1) mit drei Pivotierungspunkten um den Pfeiler versehen ist , um den der Krippenrost pivotieren wird, wobei der Pfeiler als Pivotierungspfeiler (7b) bezeichnet wird;
- der erste Pivotierungspunkt gebildet wird aus einem annähernd vertikal angeordneten Vorsprung (14), gelegen in der Nähe der inneren Ecke des Rahmens (1) in der Nähe des Pivotierungspfeilers (7b), welcher in ein Loch in einer annähernd horizontal angeordneten Platte (74) eingeschoben ist, die an dem Pivotierungspfeiler (7b) befestigt ist,
- der zweite Pivotierungspunkt gebildet wird aus einem ersten Stab (76), der annähernd vertikal in zwei Löcher bzw. in zwei Platten (77b, 78b), die annähernd horizontal und eine über der anderen gelegen angeordnet sind, eingeschoben wird, sowie in einer Schleife eines zweiten Stabes (160) annähernd horizontal befestigt wird nahe an der oberen Ecke des Rahmens (1) in der Nähe des Pivotierungspfeilers (7b), und
- der dritte Pivotierungspunkt, der gebildet wird aus dem Befestigungspunkt einer der Extremitäten eines Spanners (8) in der Nähe der oberen Extremität des Pivotierungspfeilers (7b), während die andere Extremität des so genannten Spanners befestigt ist in der Nähe der oberen Ecke des Rahmens (1) gegenüber dem Pivotierungspfeiler (7b).

13. Krippenrost nach einem der Ansprüche 1 bis 12, **dadurch gekennzeichnet, dass** der Rahmen (1) mit zwei Punkten zur Feststellung des Krippenrostes versehen ist:
- der erste Feststellungspunkt wird gebildet aus einem Vorsprungelement (12a), gelegen in der Nähe der unteren Ecke des Rahmens (1) gegenüber dem Pivotierungspfeiler (7b), annähernd vertikal und unbeweglich eingeschoben zwischen zwei ersten Platten (72, 73), jede vorgesehen mit einem Feststellungsstab (71), wobei dieser Blockierungsstab (71) den Vorsprung (12a) zwischen dem Pfeiler (7a), entgegengesetzt dem Pivotierungspfeiler (7b), und dem so genannten Feststellungsstab (71) festhält,
- der zweite Feststellungspunkt wird gebildet aus einem annähernd vertikalen und unbeweglichen zweiten Stab (76), welcher eingeschoben ist in zwei Löcher der Platten (77a, 78a), die annähernd horizontal und eine über der anderen gelegen angeordnet sind, sowie in die Schleife eines zweiten Stabes (150) annähernd horizontal, auf der Seite des Rahmens (1) in der Nähe des Pivotierungspfeilers (7b) gelegen, befestigt wird.

14. Verfahren zur Montage des Krippenrostes nach einem der Ansprüche 1 bis 13, **dadurch gekennzeichnet, dass** dieses folgende Etappen umfasst:
- Befestigung des Rahmens (1) zwischen den Pfeilern (7a, 7b) des Farmgebäudes,
- Befestigung der rohrförmigen Zwischenstangen (3) an dem Rahmen (1),
- Befestigung des Rostes (4) an den rohrförmigen Zwischenstangen (3),
- Befestigung der äußeren rohrförmigen Stangen (2) an dem Rahmen (1) und an dem Rost (4),
- Befestigung des äußeren Stabes (5) an den außen liegenden rohrförmigen Stangen (2), und
- Befestigung der Fläche (6) an den äußeren Stäben (5) und an dem Rahmen (1).
